(19) Europäisches Patentamt
European Patent Office
Office européen des brevets

(11) Veröffentlichungsnummer: **0 140 005**
**B1**

# (12) EUROPÄISCHE PATENTSCHRIFT

(45) Veröffentlichungstag der Patentschrift: **17.11.88**

(51) Int. Cl.⁴: **H 05 H 1/24**, H 01 J 35/00

(21) Anmeldenummer: **84110212.2**

(22) Anmeldetag: **28.08.84**

## (54) Vorrichtung zur Erzeugung einer Plasmaquelle mit hoher Strahlungsintensität in Röntgenbereich.

(30) Priorität: **10.09.83 DE 3332711**

(43) Veröffentlichungstag der Anmeldung: **08.05.85 Patentblatt 85/19**

(45) Bekanntmachung des Hinweises auf die Patenterteilung: **17.11.88 Patentblatt 88/46**

(84) Benannte Vertragsstaaten: **DE FR GB IT NL SE**

(56) Entgegenhaltungen:
**PROCEEDINGS OF THE SOCIETY OF PHOTO-OPTICAL INSTRUMENTATION ENGINEERS, Band 316, 1981, Seiten 196-202, San Diego, US; R.A. GUTCHECK et al.: "intense plasma source for X-ray microscopy"**
**TECHNIQUES C.E.M., Nr. 90, Juni 1974, Seiten 25-27, Paris, FR; G. FEUGUEUR et al.: "Banc d'énergie de 400 kilojoules pour l'alimentation d'une décharge électrique focalisante"**
**JOURNAL OF APPLIED PHYSICS, Band 37, Nr. 13, Dezember 1966, Seiten 4944-4952, New York, US; E.H. BEXKNER: "Production and diagnostic measurements of kilovolt high-density deuterium, helium and neon plasmas"**
**THE PHYSICS OF FLUIDS, Band 9, Nr. 10, Oktober 1966, Seiten 2080-2082, New York, US; J.W. MATHER et al.: "Image converter observations of the development of the dense plasma focus discharge"**

(73) Patentinhaber: **Firma Carl Zeiss, D-7920 Heidenheim (Brenz) (DE)**
(84) Benannte Vertragsstaaten: **DE FR IT NL SE**

(73) Patentinhaber: **CARL-ZEISS-STIFTUNG trading as CARL ZEISS, D-7920 Heidenheim (Brenz) (DE)**
(84) Benannte Vertragsstaaten: **GB**

(72) Erfinder: **Herziger, Gerd, Prof. Dr.-Ing., Fasanenweg 2, D-6102 Rossdorf 2 (DE)**
Erfinder: **Neff, Willi, Dr. rer. nat., Am Schafberg 4, D-6120 Michelstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft eine Vorrichtung zur Erzeugung einer Plasmaquelle mit hoher Strahlungsintensität im Röntgenbereich nach dem Oberbegriff des Anspruchs 1.

Derartige Vorrichtungen sind unter der Bezeichnung Plasmafokus seit einigen Jahren bekannt – siehe das Dokument Techniques C.E.M., Nr. 90, Juni 1974, Seiten 25–27, Paris, FR.

Bei diesen Vorrichtungen entstehen bei jedem vom Energiespeicher gelieferten Impuls Ionisierungsprozesse im Gas des Entladungsraumes. Diese führen dazu, dass eine dünne Plasmaschicht entsteht, die sich mit grosser Geschwindigkeit zum offenen Ende des Entladungsraumes hin bewegt. Nach Erreichen dieses offenen Endes wird das Plasma von Magnetkräften auf die Achse der Innenelektrode komprimiert. Es tritt eine solche Verdichtung des Plasmas auf, dass hier von einem Plasmafokus gesprochen wird. Dieser Plasmafokus hat in etwa zylinderförmige Gestalt mit Durchmessern von 100 bis 300 µm. Im Plasmafokus wird unter anderem Röntgenstrahlung ausgelöst.

Bei den bekannten Vorrichtungen werden die Ionisierungsprozesse am geschlossenen Ende des Entladungsraumes unkontrolliert ausgelöst, so dass sich einzelne Funkenkanäle, sog. Filamente ausbilden – siehe das Dokument The Physics of Fluids, Bd. 9, Nr. 10, Oktober 1966, Seiten 2080–2082, New York, US. Die entstehende Plasmaschicht ist demzufolge nicht homogen sondern besteht aus einer Anzahl solcher Filamente. Jedes dieser Filamente ist von einem Magnetfeld umgeben. Im Fokus verhindern diese Filamente durch eingeschlossene Magnetfelder die maximale Kompression. Der Plasmafokus hat damit einen nicht mehr reduzierbaren Fokusdurchmesser, der vor allem von Entladung zu Entladung verschieden, d.h. nicht reproduzierbar ist.

Durch die unkontrollierte Auslösung der Ionisierungsprozesse im Gasraum ist die Verteilung der entstehenden Filamente nicht reproduzierbar. Die Lage des resultierenden Plasmafokus ist deshalb gewissen Schwankungen unterworfen.

Da also bei den bekannten Vorrichtungen weder die Lage noch der Fokusdurchmesser des Plasmafokus reproduzierbar ist, lässt sich ein solcher Fokus beispielsweise nicht als definierte Röntgenstrahlen-Quelle in röntgenoptischen Geräten verwenden.

Es ist die Aufgabe der vorliegenden Erfindung eine Vorrichtung zur Erzeugung einer Plasmaquelle mit hoher Strahlungsintensität im Röntgenbereich zu schaffen, welche das Plasma in reproduzierbarer Weise mit grosser Homogenität störungsfrei zu haben Teilchen- und Energiedichten komprimiert und die demzufolge als nahezu punktförmige Röntgenstrahlungs-Quelle mit reproduzierbarem Durchmesser und reproduzierbarer Lage verwendet werden kann.

Diese Aufgabe wird durch eine Vorrichtung gelöst, welche sich durch die Merkmalskombination nach dem Kennzeichen des Anspruchs 1 auszeichnet.

Die bei der Vorrichtung nach der Erfindung vorgesehene Feldemissionselektrode sorgt dafür, dass eine genügend hohe Elektronendichte, welche Werte um $10^{10}/cm^3$ erreicht, an einer genau definierten Stelle zur Verfügung steht. Diese Elektronen werden durch das elektrische Feld im Entladungsraum zum Isolator der Innenelektrode und zugleich in Richtung zum offenen Ende des Entladungsraumes hin bewegt. Sie erreichen durch die zwischen Innen- und Aussenelektrode angelegte Spannung, welche Werte um 20 KV hat nach Durchlaufen des Weges d eine so hohe kinetische Energie ($>$500 eV) dass sie ohne Stösse im Gasraum direkt auf die Isolatoroberfläche auftreffen. Dabei werden von dieser Oberfläche Sekundärelektronen ausgelöst. Diese werden durch die Potentialführung im Entladungsraum in Verbindung mit der Restladung in der Isolatoroberfläche auf diese zurückbeschleunigt und erzeugen dort neue Sekundärelektronen. Dieser Vorgang erfolgt repetitiv, wobei die kinetische Energie der Elektronen ständig abnimmt und schliesslich auf einen Wert absinkt, bei dem Ionisierungsprozesse im Gasraum in unmittelbarer Umgebung der Isolatoroberfläche im Maximum der Ionisationswahrscheinlichkeit auftreten. Mit anderen Worten wird bei der Vorrichtung nach der Erfindung die Anzahl der aus der Emitter-Elektrode austretenden Elektronen vervielfacht, wobei gleichzeitig ihre kinetische Energie abnimmt und zwar solange bis der maximale Wirkungsquerschnitt für Ionisationsstösse der Elektronen mit dem Gas im Entladungsraum erreicht ist.

Die Elektronen sind dabei durch den beschriebenen Wirkungsmechanismus mit sehr hoher Dichte gleichmässig auf der Isolatoroberfläche verteilt.

Die Ionisationsprozesse im Gasraum werden also definiert mit hoher Elektronendichte und homogener Elektronenverteilung ausgelöst, so dass es zum Aufbau einer homogenen Entladung kommt. Die dabei gebildete Plasmaschicht ist homogen, die Bildung von Filamenten ist vermieden.

Die spezielle Ausbildung des Schalters zwischen Energiequelle und Entladungsraum sorgt einmal dafür, dass zu Beginn der Entladung genügend Energie zur Verfügung steht und dass zum anderen die Energienachlieferung während des Entladungsvorganges gewährleistet ist, so dass die Entladung nicht abreisst.

Die entstehende homogene Plasmaschicht wird im Fokus in reproduzierbarer Weise mit grosser Homogenität störungsfrei zu hohen Teilchen- und Energiedichten komprimiert. Die mit der Vorrichtung nach der Erfindung im Plasmafokus erreichbaren Teilchendichten ($>10^{20}cm^{-3}$) sind mindestens um eine Zehnerpotenz höher als die mit bekannten Vorrichtungen erreichbaren Werte. Die erzielten Fokusdurchmesser liegen um einen Faktor 2 bis 3 unter den bisher erzielten Werten.

Mit der Vorrichtung nach der Erfindung ist also durch die Kombination der Merkmale des Anspruchs 1 eine Plasmaquelle geschaffen, deren

Lage und Durchmesser infolge der Homogenität der Entladung reproduzierbar ist und die zudem einen so kleinen Durchmesser hat, dass sie als nahezu punktförmige Röntgenstrahlungsquelle vorteilhaft in röntgen-optischen Geräten, beispielsweise in einem Röntgenmikroskop oder einem Röntgenstrahl-Lithographie-Gerät verwendet werden kann.

Im Plasmafokus wird einmal inkohärente und zum anderen auch kohärente Röntgenstrahlung ausgelöst. Die Wellenlängen der inkohärenten Strahlung sind durch das im Entladungsraum verwendete Gas oder Gasgemisch bestimmt. Sie liegen beispielsweise im Bereich 15–20 Å oder 24–40 Å.

Überraschend hat sich gezeigt, dass durch die beschriebenen Massnahmen das Plasmavolumen auf kleinere Durchmesser komprimiert wird als je zuvor beobachtet, und dass in diesen Plasmen eine periodische Struktur der Elektronendichte mit einer Strukturlänge L auftritt, die in Wechselwirkung mit relativistischen Elektronen, die ebenfalls in diesem Plasma auftreten, zur Emission einer intensiven monochromatischen Röntgenstrahlung führen. Deren Wellenlänge $\Lambda$ ist gegeben durch die Beziehung

$$\Lambda = L/2\gamma^2.$$

Dabei ist L der Abstand der erwähnten Strukturen und $\gamma$ die relativistische Energie der Elektronen.

Die kohärente, monochromatische Röntgenstrahlung tritt in einem kleinen Raumwinkel von beispielsweise 0,16 rad auf, die inkohärente Strahlung in einem relativ grossen Raumwinkel.

Die in den Unteransprüchen 2 bis 13 beschriebenen Merkmale dienen der vorteilhaften Ausbildung der Vorrichtung nach Anspruch 1. Dabei betreffen die Unteransprüche 2 und 3 Ausbildungen der Emitterelektrode, die Unteransprüche 4–6 die Ausbildung des Isolators und die Unteransprüche 7–9 die Ausbildungen der Aussenelektrode, die gewährleisten, dass am Ende des Isolators Funkenentladungen mit Sicherheit vermieden werden.

Die Unteransprüche 10 bis 12 beziehen sich auf die Ausbildung des Schalters, Unteranspruch 13 auf das verwendete Gas, Unteranspruch 14 auf die Innenelektrode und die Unteransprüche 15 bis 18 geben vorteilhafte Anwendungen der Vorrichtung nach der Erfindung an.

Die Erfindung wird im folgenden anhand der Fig. 1–7 der beigefügten Zeichnungen näher erläutert. Dabei zeigen:

Fig. 1 einen Schnitt durch ein Ausführungsbeispiel der gesamten Vorrichtung;

Fig. 2 eine Darstellung des Entladungsraumes in einem zweiten Ausführungsbeispiel;

Fig. 3 einen Schnitt entlang der Linie III–III der Fig. 2;

Fig. 4 eine Teilansicht einer Ausführungsform der Emitter-Elektrode;

Fig. 5 einen Teilschnitt durch ein weiteres Ausführungsbeispiel des Entladungsraumes:

Fig. 6 einen Teilschnitt durch ein anderes Ausführungsbeispiel des Entladungsraumes;

Fig. 7 verschiedene Stadien bei der Ausbildung des Plasmafokus in einem Ausführungsbeispiel der Vorrichtung.

Bei dem in Fig. 1 dargestellten Ausführungsbeispiel der Vorrichtung ist eine rohrförmige Innenelektrode mit 1 und eine diese konzentrisch umgebende zylinderförmige Aussenelektrode mit 2 bezeichnet. Diese beiden Elektroden bestehen aus gut leitendem Material, z.B. Silber oder Kupfer, wobei die Aussenelektrode 2 vorzugsweise aus durchbrochenem Material hergestellt ist. Die Innenelektrode 1 ist von einem rohrförmigen Isolator 3 umgeben. Dieser besteht beispielsweise aus Aluminiumoxid in homogen polykristalliner Form, aus einkristallinem Saphir oder auch aus dem unter dem Warenzeichen «Pyrex» im Handel befindlichen Glas. Das Material des Isolators 3 und die Rauhigkeit seiner Oberfläche sind so gewählt, dass die Isolatoroberfläche einen hohen Sekundärelektronen-Emissionskoeffizient $\eta$ hat, der beispielsweise im Bereich $\eta = 3$ liegt.

Der von den Elektroden 1 und 2 gebildete Entladungsraum ist nach rechts hin offen und nach links hin durch einen Isolator 5 und eine auf dem Potential der Aussenelektrode 2 liegende Feldemissionselektrode 4 geschlossen. Die Elektrode 4 ist im dargestellten Beispiel als ringförmige Schneide ausgebildet. Der Radius $r_0$ ihrer Schneide genügt der Beziehung $V/r_0 = 10^7$ V/cm, wobei V die zwischen die Elektroden 1 und 2 angelegte Spannung bedeutet.

Unmittelbar mit dem Entladungsraum 1,2 ist ein induktivitätsarmer Hochleistungsschalter verbunden, der zum Schalten hoher Leistungsflüsse mit hohen Anstiegszeiten dient. Dieser Schalter verbindet einen mit 6 bezeichneten Energiespeicher mit dem Entladungsraum. Der Energiespeicher kann als kapazitiver Energiespeicher geringer Induktivität ausgeführt sein, es ist jedoch auch möglich einen induktiven Speicher mit hohem Strom (> 100 KA) zu verwenden.

Der in Fig. 1 dargestellte Hochleistungsschalter ist als getriggerte niederinduktive Mehrkanal-Funkenstrecke ausgebildet.

Diese besteht aus einem ringförmigen Bauteil 7, welches in gleichen Abständen angeordnete Elektroden 8 aufweist. Ein weiteres Bauteil 9 weist ebenfalls in gleichen Abständen auf einem Ring angeordnete Elektroden 10 auf, welche den Elektroden 8 des äusseren Ringes 7 gegenüberstehen. Die Elektrodenpaare 8, 10 werden von den Isolatoren 5 und 11 umschlossen, welche einen geschlossenen, kleinvolumigen Raum 13 bilden. Auf dem Isolator 11 ist eine Triggerelektrode 12 angeordnet, welche zwischen den beiden Elektroden 8 und 10 steht. Die Isolatoren 5 und 11 sind jeweils so ausgebildet, dass Kriechentladungen und andere störende Effekte verhindert sind. Der Raum 13 ist beispielsweise mit Gas gefüllt, wobei die Gasart und die Gasdichte optimiert sind, so dass die Anstiegszeit und die Jitterzeit minimiert werden.

Die Triggerelektroden 12 sind mit einer eigenen Energiequelle 14 verbunden, welche beispielsweise auch als kapazitiver Energiespeicher geringer Induktivität ausgeführt sein kann.

Nach Anlegen eines Hochspannungspulses werden die Triggerelektroden 12 innerhalb 500 ps gleichzeitig gezündet. Dabei wird von der Energiequelle 14 sowohl der Funkenstrecke 8,10 als auch dem Entladungsraum 1,2 Energie zugeführt, wobei hohe Leistungsflüsse von beispielsweise $10^8$ W/cm$^2$ mit hohen Anstiegsraten von beispielsweise $10^{17}$ W/cm$^2$ s erreicht werden.

Anstelle des in Fig. 1 dargestellten Hochleistungsschalters dessen resultierende Induktivität im Bereich von 5–10 nH liegt, können auch andere niederinduktive Hochleistungsschalter Verwendung finden, z.B. ein sättigbarer magnetischer Schalter, vorausgesetzt dass hohe Leistungsflüsse mit hohen Anstiegszeiten geschaltet werden können.

Bei dem in den Fig. 2 und 3 dargestellten Ausführungsbeispiel des von den Elektroden 1 und 2 gebildeten Entladungsraumes ist eine Feldemissionselektrode 20 vorgesehen, welche die Form einer ringförmigen Schneide hat. Die Form dieser Schneide weicht etwas von der in Fig. 1 dargestellten Form der Emitterelektrode 4 ab.

Der Entladungsraum 1,2 ist mit Gas gefüllt, welches beispielsweise reiner Wasserstoff oder reines Helium sein kann. Das Gas kann auch aus einem Gemisch von Wasserstoff mit Gasen mit höherer Ladungszahl z (beispielsweise Edelgase oder Sauerstoff) bestehen.

Der Durchmesser R der Innenelektrode 1 ist dem verwendeten Gas bzw. Gasgemisch angepasst, wobei er folgender Beziehung genügt:

$$R = \left( \frac{\mu_o \cdot I^2}{8\pi^2 \vartheta_o u^2} \right)^{1/2}.$$

Dabei ist $\rho_o$ die Gasdichte im Entladungsraum, I der Strom im stationären Zustand, u die gewünschte Geschwindigkeit der Plasmascheibe und $\mu_o$ die magnetische Feldkonstante.

Der Abstand d zwischen der Schneide der Emitterelektrode 20 und der Oberfläche des Isolators 3 ist so gross gewählt, dass die aus der Schneide der Elektrode austretenden Elektronen auf ihrem Weg zur Isolatoroberfläche 3 keine Stösse mit dem Gas im Entladungsraum 1,2 ausführen. Über den Hochleistungsschalter wird an die Elektroden 1,2 eine so hohe Spannung (etwa 20 KV) angelegt, dass eine hinreichende Dichte von freien Elektronen an der Schneide der Emitterelektrode 20 entsteht. Diese Elektronendichte kann beispielsweise $10^{10}$ cm$^{-3}$ betragen. Durch die angelegte Spannung ist die kinetische Energie der Elektronen so hoch ($>$500 eV) dass die aus der Schneide der Emitterelektrode 20 austretenden Elektronen ohne Stösse im Gasraum direkt auf die Oberfläche des Isolators 3 treffen.

Die im Entladungsraum 1,2 vorhandenen elektrischen Felder sind in Fig. 2 mit $E_r$ und $E_z$ bezeichnet. Diese setzen sich zu einem resultierenden Feld zusammen welches schräg verläuft und demzufolge die von der Schneide der Emitter-Elektrode 20 austretenden Elektronen auf einer schrägen Bahn zur Oberfläche des Isolators 3 und zugleich zum freien Ende des Entladungsraumes hin bewegt. Beim Auftreffen auf die Fläche des Isolators 3 werden Sekundärelektronen ausgelöst, welche durch die Potentialführung im Entladungsraum in Verbindung mit der Restladung in der Isolatoroberfläche auf diese zurückbeschleunigt werden und dort neue Sekundärelektronen erzeugen. Dieser Vorgang erfolgt repetitiv mit ständig abnehmender kinetischer Energie der Elektronen, wie dies in Fig. 2 durch die Elektronenbahn 21 angedeutet ist. Die Elektronen werden schliesslich gleichmässig auf der Isolatoroberfläche 3 verteilt, wie dies bei 22 angedeutet ist. Hier erreichen die Elektronen den maximalen Wirkungsquerschnitt für Ionisationsstösse der Elektronen mit dem Gas d.h. es bildet sich zwischen den Elektroden 1 und 2 eine Plasmaschicht, welches sich mit sehr hoher Geschwindigkeit zum offenen Ende des Entladungsraumes 1 hin bewegt. Die zur Bildung dieser Plasmaschicht führende Ionisierung im Gasraum erfolgt mit so hoher Elektronendichte dass eine Entwicklung von Einzelkanälen (Filamenten) unterdrückt wird und es zu dem Aufbau einer homogenen Entladung kommt.

Anstelle der in Fig. 2 dargestellten ringförmigen Schneidenelektrode 20 kann auch eine Emitter-Elektrode verwendet werden, wie sie im Ausführungsbeispiel der Fig. 4 dargestellt ist. Die Feldemissionselektrode besteht hier aus einem Kranz äquidistant angeordneter Spitzen 25, die beispielsweise einzeln ausgebildet sein können die aber auch aus einer Struktur leitfähiger Fasern, z.B. aus Kohlenstoff gebildet sein können, die in ein Trägermedium eingebettet sind. Wie Fig. 4 zeigt sind die Spitzen 25 so weit voneinander entfernt, dass die austretenden Elektronen auf der Oberfläche des Isolators 3 gleichmässig verteilt sind.

Bei dem in Fig. 5 dargestellten Ausführungsbeispiel ist ein Isolator 28 über einen Bereich der Länge $L_2$ in die Innenelektrode 1 so eingelassen, dass sein äusserer Durchmesser dem der Innenelektrode entspricht. In seinem hinteren, der Feldemissionelektrode 30 zugewandten Bereich nimmt der Durchmesser des Isolators 28 linear so zu, dass die Isolatoroberfläche in diesem Bereich einen stumpfen Winkel mit der Achse 31 und der Innenelektrode 1 bildet. Der aus Fig. 5 ersichtliche Winkel $\alpha$ liegt zweckmässig im Bereich zwischen 20° und 40°.

Durch diese Ausbildung des Isolators 28 wird die im Zusammenhang mit Fig. 2 beschriebene Bahn der von der Elektrode 30 ausgelösten Elektronen begünstigt, denn im geneigten Bereich des Isolators 28 verläuft die Bewegung der ausgelösten Elektronen bevorzugt zum freien Ende des Entladungsraumes hin. Für die aus Fig. 5 ersichtlichen Isolatorlängen $L_1$ und $L_2$ gelten die Beziehungen

$$L_1 < L_2 \text{ und } L_1 + L_2 = u \cdot t.$$

Dabei ist u die gewünschte Geschwindigkeit der Plasmaschicht im Entladungsraum unt t, gemessen in Nanosekunden, liegt zwischen den Werten 200 und 500.

Der Übergang zwischen dem Ende des Isolators 28 bzw. 3 und der Innenelektrode 1 bildet stets einen gewissen kritischen Bereich. Es ist deshalb zweckmässig die Aussenelektrode so auszubilden, dass am Ende dieses Isolators eine Funkenentstehung mit Sicherheit vermieden wird. Im Ausführungsbeispiel der Fig. 5 ist dies dadurch bewerkstelligt, dass der Abstand D zwischen der Aussenelektrode 29 und der Oberfläche des Isolators 28 der Beziehung

$$p \cdot D < U_{Zmin}$$

genügt. Dabei ist p der Druck des Gases im Entladungsraum und $U_{Zmin}$ ist die minimale Zündspannung dieses Gases.

Im Ausführungsbeispiel der Fig. 5 genügt der Abstand D der Aussenelektrode 29 über die gesamte Länge des Isolators 28 der angegebenen Beziehung. Erst im vorderen Bereich erweitert sich der Durchmesser der Aussenelektrode 29.

Fig. 6 zeigt ein anderes Ausführungsbeispiel, bei dem die Aussenelektrode 32 nur im Bereich des vorderen Endes des Isolators 28 so nach innen durchgebogen ist, dass ihr Abstand D der obenangeführten Beziehung genügt.

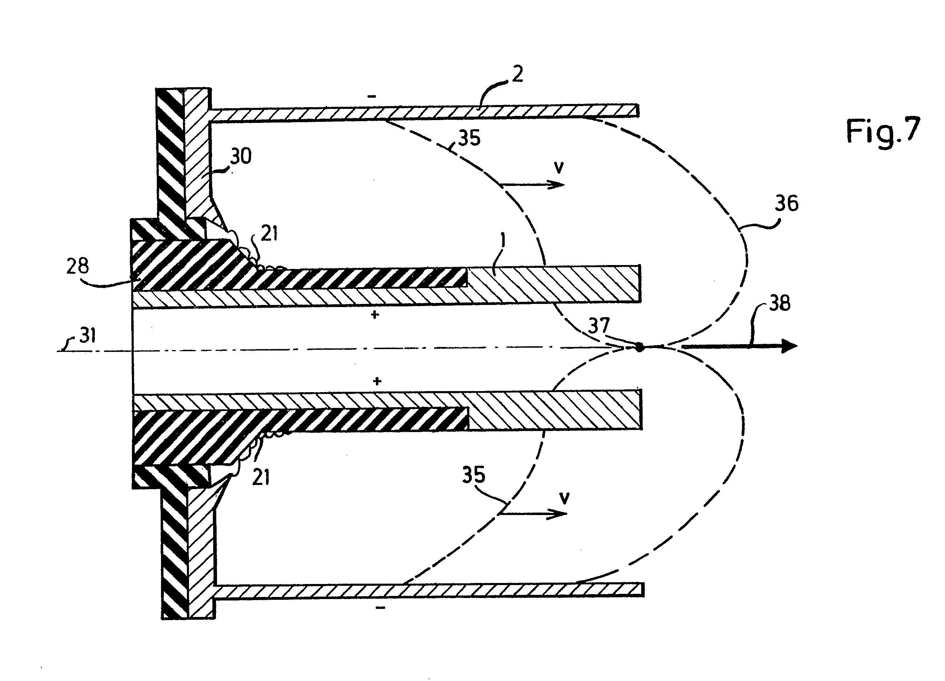

In Fig. 7 ist ein Ausführungsbeispiel dargestellt, anhand dessen die Entstehung des eigentlichen Plasmafokus beschrieben werden soll. Mittels eines Hochleistungsschalters beispielsweise der getriggerten niederinduktiven Mehrkanal-Funkenstrecke der Fig. 1 wird an die Elektroden 1 und 2 des gasgefüllten Entladungsraumes eine Hochspannung von beispielsweise 20 KV gelegt. Dadurch werden an der Spitze der Feldemissionselektrode 30 Elektronen mit einer sehr hohen Elektronendichte ausgelöst, welche sich auf der schematisch dargestellten Bahn 21 entlang der Oberfläche des Isolators 28 bewegen. Bei dieser Bewegung wird die kinetische Energie der Elektronen, welche beim ersten Auftreffen auf die Isolatoroberfläche 28 mehr als 500 eV beträgt abgebaut und zugleich wird die Anzahl der Elektronen durch Auslösen von Sekundärelektronen an der Oberfläche des Isolators 28 vervielfacht. Die Elektronen verteilen sich dabei gleichmässig auf der Isolatoroberfläche und sobald der maximale Wirkungsquerschnitt für Ionisationsstösse der Elektronen mit dem Gas des Entladungsraumes erreicht ist, entsteht eine homogene Entladung, welche eine Plasmaschicht erzeugt, die in Fig. 7 schematisch mit 35 bezeichnet ist.

Diese Plasmaschicht 35 bewegt sich mit hoher Geschwindigkeit u in Richtung auf das freie Ende des Entladungsraumes 1,2. Nach Erreichen dieses freien Endes wird das Plasma von Magnetfeldern vor der Innenelektrode 1 komprimiert und bildet schliesslich die mit 36 bezeichnete Konfiguration. Bei dieser Konfiguration entsteht der eigentliche Plasmafokus 37, in dem das Plasma in reproduzierbarer Weise zu hohen Teilchen- und Energiedichten komprimiert wird. Im Plasmafokus 37 wird Röntgenstrahlung ausgelöst, welche schematisch mit 38 bezeichnet ist.

Es ist aus Fig. 7 ersichtlich, dass der Plasmafokus 37 ausserordentlich klein ist und als nahezu punktförmige Strahlungsquelle Verwendung finden kann.

Wie schon weiter oben beschrieben besteht die ausgelöste Röntgenstrahlung 38 aus einem kohärenten und einem nichtkohärenten Anteil.

Der Plasmafokus 37 kann vorteilhaft als Strahlungsquelle in röntgenoptischen Geräten, beispielsweise in einem Röntgenmikroskop oder einem Gerät zur Röntgenstrahl-Lithographie verwendet werden.

**Patentansprüche**

1. Plasmafokus-Vorrichtung zur Erzeugung einer Plasmaquelle mit hoher Strahlungsintensität im Röntgenbereich, bestehend aus einer hohlzylindrischen Innenelektrode, die an einem Ende von einem rohrförmigen Isolator umgeben ist und die zusammen mit einer sie konzentrisch im Abstand D umgebenden Aussenelektrode einen mit Gas geringen Druckes gefüllten, zum anderen Ende der Innenelektrode hin offenen Entladungsraum bildet, und einem induktivitätsarmen Hochleistungs-Schalter zum kurzzeitigen Verbinden der an der geschlossenen Seite des Entladungsraumes gelegenen Enden der Elektroden mit einem elektrischen Energiespeicher, gekennzeichnet durch die Kombination der folgenden Merkmale

a) auf der geschlossenen Seite des Entladungsraumes umgibt eine auf dem Potential der Aussenelektrode (2) liegende Feldemissions-Elektrode (4) den Isolator (3) konzentrisch in einem Abstand d zwischen Elektrodenspitze und Isolatoroberfläche, der kleiner ist als die freie Weglänge $\lambda$ der Elektronen im Gas des Entladungsraumes;

b) Material und Oberflächenbeschaffenheit des Isolators (3) sind so gewählt, dass dessen Oberfläche einen hohen Sekundärelektronen-Koeffizient $\eta$ hat, der in der Grössenordnung von 3 liegt.

2. Vorrichtung nach Anspruch 1, dadurch gekennzeichnet, dass die Feldemissions-Elektrode als ringförmige Schneide (4, 20) ausgebildet ist.

3. Vorrichtung nach Anspruch 1, dadurch gekennzeichnet, dass die Feldemissions-Elektrode aus gleichabständigen Spitzen (25) besteht.

4. Vorrichtung nach Anspruch 1, dadurch gekennzeichnet, dass der Durchmesser des Isolators (28) in seinem hinteren, der Feldemissionselektrode (30) zugewandten Bereich linear so zunimmt, dass die Isolatoroberfläche in diesem Bereich einen stumpfen Winkel mit der Achse (31) der Innenelektrode (1) bildet.

5. Vorrichtung nach Anspruch 1, dadurch gekennzeichnet, dass der die Innenelektrode (1) umgebende Isolator (3, 28) so in diese eingelassen ist, dass sein äusserer Durchmesser mindestens über einen Teil der Isolatorlänge L dem der Innenelektrode (1) entspricht.

6. Vorrichtung nach Anspruch 4 und 5, dadurch gekennzeichnet, dass die Gesamtlänge L des Isolators der Beziehung

$$L = u \cdot t$$

genügt, wobei u die gewünschte Geschwindigkeit der Plasmaschicht im Entladungsraum ist und t in Nanosekunden gemessen zwischen den Werten 200 und 500 liegt.

7. Vorrichtung nach Anspruch 1, dadurch gekennzeichnet, dass der Abstand D der Aussenelektrode (2) vom Isolator im Bereich des vorderen Isolatorendes (3, 28) der Beziehung

$$p \cdot D < U_{Zmin}$$

genügt, wobei p den Druck des Gases im Entladungsraum und $U_{Zmin}$ die minimale Zündspannung dieses Gases bezeichnen.

8. Vorrichtung nach Anspruch 7, dadurch gekennzeichnet, dass der Abstand D der Aussenelektrode (29) über die gesamte Länge des Isolators (28) der angegebenen Beziehung genügt und sich im vorderen Bereich der Aussenelektrode erweitert.

9. Vorrichtung nach Anspruch 7, dadurch gekennzeichnet, dass die Aussenelektrode (32) im Bereich des vorderen Isolatorendes nach innen so durchgebogen ist, dass der Abstand D in diesem Bereich der angegebenen Beziehung genügt.

10. Vorrichtung nach Anspruch 1, dadurch gekennzeichnet, dass der Schalter als getriggerte niederinduktive Mehrkanal-Funkenstrecke ausgebildet ist (Fig. 1).

11. Vorrichtung nach Anspruch 10, dadurch gekennzeichnet, dass die Triggerelektroden (12) in gleichen Abständen auf einem Trägerring (11) befestigt und mit den zugeordneten Elektroden der Funkenstrecke (8, 9) innerhalb eines gas- oder flüssigkeitsgefüllten kleinvolumigen Raumes (13) angeordnet sind.

12. Vorrichtung nach Anspruch 11, dadurch gekennzeichnet, dass direkt mit den Triggerelektroden (12) ein zusätzlicher Energiespeicher (14) verbunden ist.

13. Vorrichtung nach Anspruch 1, dadurch gekennzeichnet, dass der Raum zwischen Innen- und Aussenelektrode (1, 2) mit einem Gemisch aus Wasserstoff und Gasen höherer Ladungszahl z gefüllt ist.

14. Vorrichtung nach Anspruch 1 und 13, dadurch gekennzeichnet, dass der Durchmesser R der Innenelektrode (1) entsprechend dem verwendeten Gasgemisch gewählt ist.

15. Verwendung der Vorrichtung nach Anspruch 1 und einem oder mehreren der folgenden als Quelle kohärenter Röntgenstrahlung.

16. Verwendung der Vorrichtung nach Anspruch 1 und einem oder mehreren der folgenden als Quelle inkohärenter polychromatischer Röntgenstrahlung.

17. Verwendung nach Anspruch 15 oder 16 als Strahlungsquelle in einem Röntgenmikroskop.

18. Verwendung nach Anspruch 15 oder 16 als Strahlungsquelle in einem Lithographie-Gerät.

## Claims

1. A plasma focus device for producing a plasma source of high-intensity radiation in the X-ray region, comprising a hollow-cylindrical inner electrode which at one end is surrounded by a tubular insulator and which, together with an outer electrode which surrounds it concentrically at a distance away D, forms a discharge space filled with gas of low pressure which is open toward the other end of the inner electrode, and a high-efficiency switch of low inductance for momentarily connecting the ends of the electrodes located on the closed side of the discharge space with an electrical energy storage, characterized by the combination of the following features:

a) on the closed end of the discharge space, a field emission electrode (4) which is at the potential of the outer electrode (2) surrounds the insulator (3) concentrically at a distance d between the electrode point and the insulator surface, which distance d is smaller than the mean free path of the electrons in the gas of the discharge space;

b) the material and the nature of the surface of the insulator (3) are so selected that said surface has a high coefficient $\eta$ of secondary-electron emission, which lies in the order of 3.

2. A device according to claim 1, characterized by the fact that the field-emission electrode is developed as an annular knife edge (4, 20).

3. A device according to claim 1, characterized by the fact that the field-emission electrode consists of equally spaced spikes (25).

4. A device according to claim 1, characterized by the fact that the diameter of the insulator (28) in its rear region facing the field-emission electrode (39) increases linearly in such a manner that the surfacer of the insulator in this region forms an obtuse angle with the axis (31) of the inner electrode (1).

5. A device according to claim 1, characterized by the fact that the insulator (3, 28) which surrounds the inner electrode (1) is so recessed in said electrode that its outer diameter, at least over a part of the length L of the insulator corresponds to the diameter of the inner electrode (1).

6. A device according to claim 4 and claim 5, characterized by the fact that the total length L of the insulator satisfies the relationship

$$L = u \cdot t,$$

wherein u is the desired velocity of the plasma layer in the discharge space and wherein t measured in nanoseconds is between 200 and 500.

7. A device according to claim 1, characterized by the fact that the distance D of the outer electrode (2) from the insulator in the region of the front end of the insulator (3, 28) satisfies the relationship

$$p \cdot D < U_{Zmin}$$

in which p is the pressure of the gas in the discharge space and $U_{Zmin}$ is the minimum ignition voltage of this gas.

8. A device according to claim 7, characterized by the fact that the distance D of the outer electrode (29) satisfies said relationship over the entire length of the insulator (28) and widens in the front region of the outer electrode.

9. A device according to claim 7, characterized by the fact that the outer electrode (32) is so curved inward in the region of the front end of the insulator that the distance D satisfies the said relationship indicated in this region.

10. A device according to claim 1, characterized by the fact that the switch is developed as a triggered low-induction multi-channel spark gap (Fig. 1).

11. A device according to claim 10, characterized by the fact that the trigger electrodes (12) are at spaced equal distances on a support ring (11) and are arranged, together with the associated electrodes of the spark gap (8, 9) within a gas-filled or liquid-filled space (13) of small volume.

12. A device according to claim 11, characterized by the fact that an additional engergy storage (14) is connected directly to the trigger electrodes (12).

13. A device according to claim 1, characterized by the fact that the space between inner and outer electrodes (1, 2) is filled with pure hydrogen or with gases of higher atomic number Z or with a mixture of said gases.

14. A device according to claim 1 and claim 13, characterized by the fact that the diameter R of the inner electrode (1) is selected in accordance with the gaseous mixture used.

15. Use of the device according to claim 1 and one or more of the following claims as source of coherent X-radiation.

16. Use of the device according to claim 1 and one or more of the following claims as source of incoherent polychromatic X-radiation.

17. Use according to claim 15 or claim 16, as a source of radiation in an X-ray microscope.

18. Use according to claim 15 or claim 16 as a source of radiation in a lithography apparatus.

**Revendications**

1. Dispositif à foyer plasma, pour la génération d'une source de plasma à haute intensité de rayonnement dans le domaine des rayons X, comprenant une électrode interne creuse de forme cylindrique, qui est entourée à une extrémité par un isolateur tubulaire et qui forme, ensemble avec une électrode externe qui l'entoure concentriquement à une distance D, un espace de décharge rempli de gaz sous faible pression, espace qui est ouvert à l'autre extrémité de l'électrode interne, et un interrupteur de haute puissance et de faible inductivité pour brièvement connecter les extrémités des électrodes situées du côté fermé de l'espace de décharge à un accumulateur d'énergie électrique, caractérisé par la combinaison des caractéristiques suivantes:

a) du côté fermé de l'espace de décharge, l'isolateur (3) est entouré concentriquement par une électrode d'émission de champ (4) qui se trouve au potentiel de l'électrode externe (2), avec une distance d entre l'extrémité de cette électrode et la surface de l'isolateur, qui est plus petite que la longueur de parcours libre $\lambda$ des électrons dans le gaz de l'espace de décharge; et

b) le matériau et la nature de la surface de l'isolateur (3) sont choisis de manière que cette surface possède un haut coefficient d'émission d'électrons secondaires $\eta$, lequel est de l'ordre de 3.

2. Dispositif selon la revendication 1, caractérisé en ce que l'électrode d'émission de champ est réalisée pour former un tranchant annulaire (4, 20).

3. Dispositif selon la revendication 1, caractérisé en ce que l'électrode d'émission de champ est constituée de pointes (25) équidistantes.

4. Dispositif selon la revendication 1, caractérisé en ce que le diamètre de l'isolateur (28) dans sa partie postérieure, dirigée vers l'électrode d'émission de champ (30), augmente de manière que la surface de l'isolateur dans cette zone renferme un angle obtus avec l'axe (31) de l'électrode interne (1).

5. Dispositif selon la revendication 1, caractérisé en ce que l'isolateur (3, 28) entourant l'électrode interne (1) est encastré dans cette électrode de manière que son diamètre extérieur corresponde à celui de l'électrode interne (1) sur une partie au moins de la longueur L de l'isolateur.

6. Dispositif selon les revendications 4 et 5, caractérisé en ce que la longueur totale L de l'isolateur satisfait à la relation

$$L = u \cdot t$$

où u = la vitesse désirée de la couche de plasma dans l'espace de décharge et t, mesuré en nanosecondes, est compris entre 200 et 500.

7. Dispositif selon la revendication 1, caractérisé en ce que la distance D entre l'électrode externe (2) et l'isolateur, dans la zone de l'extrémité antérieure de l'isolateur (3, 38), satisfait à la relation

$$p \cdot D < U_{Zmin}$$

où p représente la pression du gaz dans l'espace de décharge et $U_{Zmin}$ représente la tension disruptive minimale de ce gaz.

8. Dispositif selon la revendication 7, caractérisé en ce que la distance D entre l'électrode externe (29) et l'isolateur satisfait à la relation indiquée sur toute la longueur de l'isolateur (28) et que cette distance augmente dans la zone antérieure de l'électrode externe.

9. Dispositif selon la revendication 7, caractérisé en ce que l'électrode externe (32) est recourbée vers l'intérieur dans la zone de l'extrémité antérieure de l'isolateur, de manière que la distance D satisfasse à la relation indiquée dans cette zone.

10. Dispositif selon la revendication 1, caractérisé en ce que l'interrupteur est réalisé comme un

éclateur multicanaux déclenché et à faible inductivité (Fig. 1).

11. Dispositif selon la revendication 10, caractérisé en ce que les électrodes de déclenchement (12) sont fixées à intervalles égaux sur un anneau porteur (11) et sont disposées, ensemble avec les électrodes coordonnées de l'éclateur (8, 9), à l'intérieur d'une chambre (13) de petit volume, qui est remplie d'un gaz ou d'un liquide.

12. Dispositif selon la revendication 11, caractérisé en ce qu'un accumulateur d'énergie supplémentaire (14) est relié directement aux électrodes de déclenchement (12).

13. Dispositif selon la revendication 1, caractérisé en ce que l'espace entre les électrodes interne et externe (1, 2) est rempli d'un mélange d'hydrogène et de gaz ayant un nombre atomique z plus élevé.

14. Dispositif selon les revendications 1 et 13, caractérisé en ce que le diamètre R de l'électrode interne (1) est choisi en fonction du mélange gazeux employé.

15. Utilisation du dispositif selon la revendication 1 et une ou plusieurs des revendications suivantes comme source de rayonnement cohérent.

16. Utilisation du dispositif selon la revendication 1 et une ou plusieurs des revendications suivantes comme source de rayonnement X polychromatique incohérent.

17. Utilisation selon la revendication 15 ou 16 comme source de rayonnement dans un microscope aux rayons X.

18. Utilisation selon la revendication 15 ou 16 comme source de rayonnement dans un appareil de lithographie.

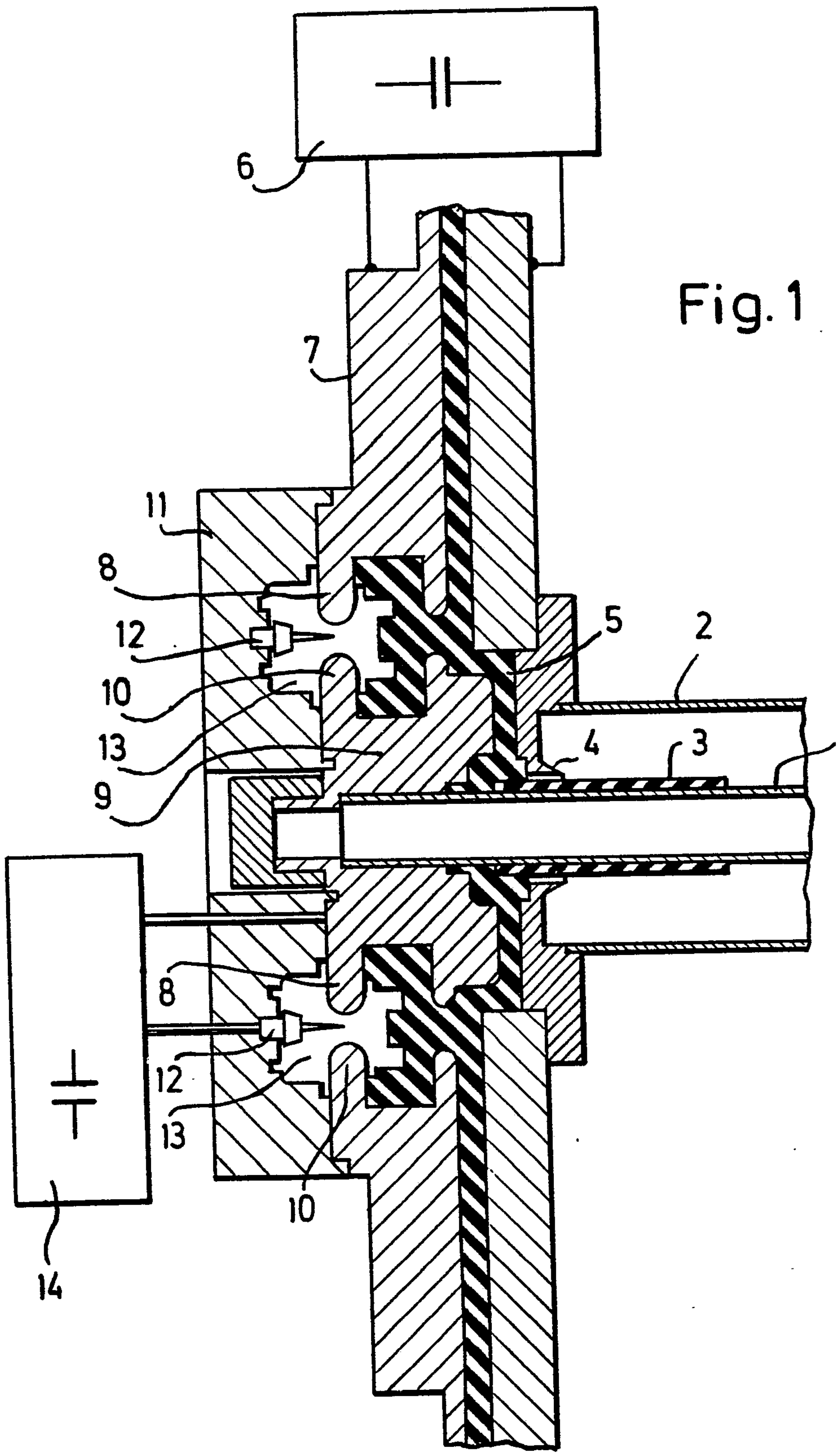


Fig. 1

Fig.2

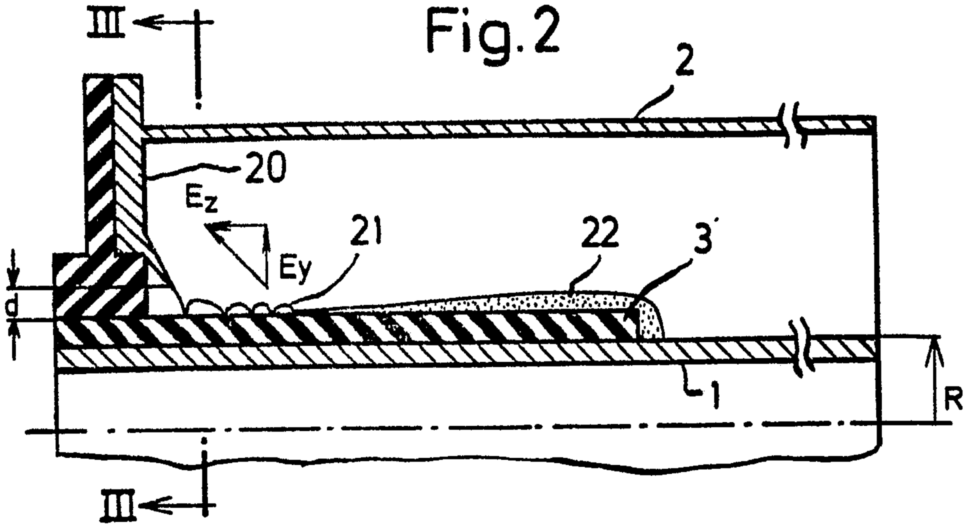


Fig.3

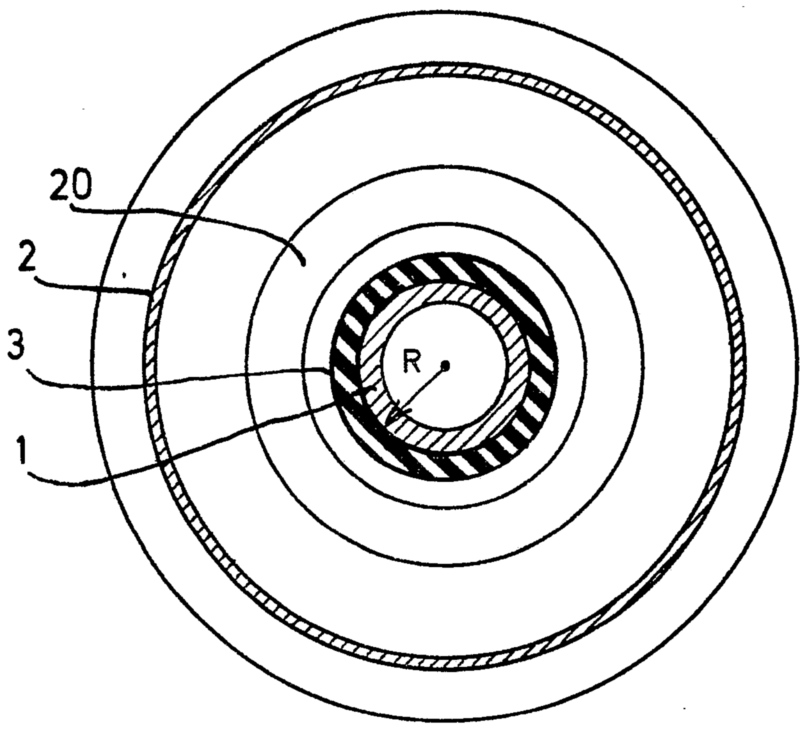


Fig.4

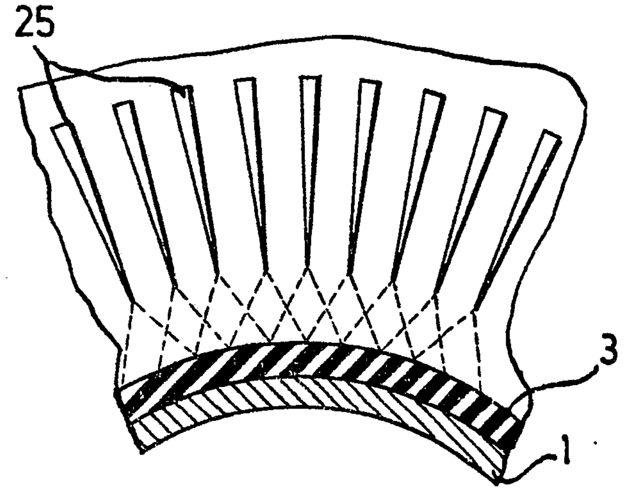

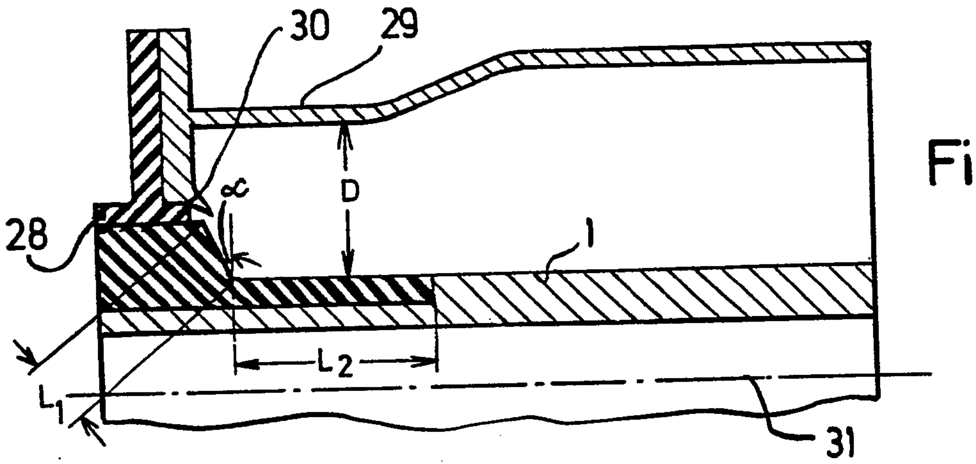


Fig.5

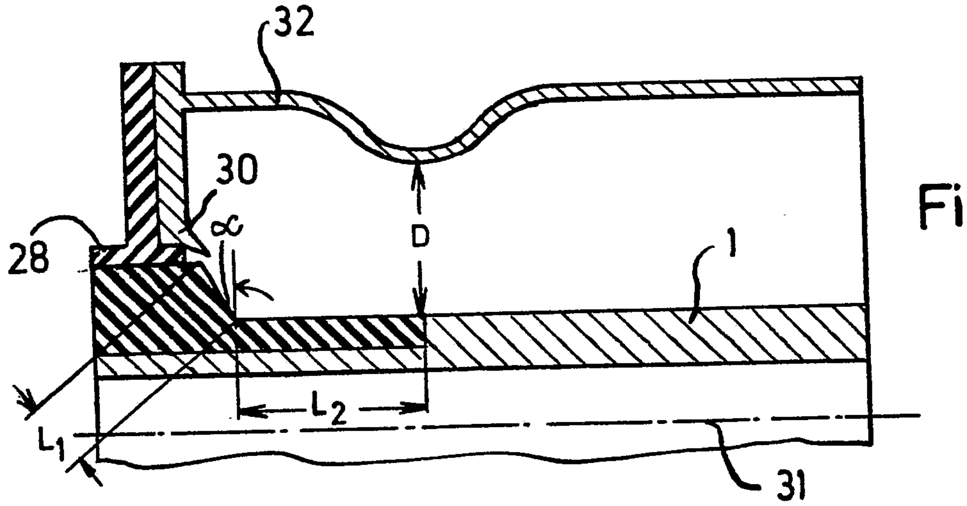


Fig.6

Fig.7